# EUROPEAN PATENT SPECIFICATION

(11) **EP 3 104 470 B1**
(45) Date of publication and mention of the grant of the patent: **15.08.2018**
(21) Application number: 16173851.3
(22) Date of filing: 10.06.2016
(51) Int. Cl.: H01R 24/78, H01R 25/00, H01R 103/00

(54) **SOCKET ASSEMBLY WITH MULTIPLE FLUSH-MOUNTING BOXES**
STECKDOSENANORDNUNG MIT MEHREREN UNTERPUTZMONTIERBAREN KÄSTEN
ENSEMBLE DE DOUILLE AVEC DE MULTIPLES BOÎTES DE MONTAGE AFFLEURANT

(30) Priority: 12.06.2015 BE 201500166
(43) Date of publication of application: 14.12.2016
(73) Proprietor: Niko NV, 9100 Sint-Niklaas (BE)
(72) Inventor: Devenyn, Diederik Jozef Luc, 9820 Merelbeke (BE)
(74) Representative: D'Halleweyn, Nele Veerle Trees Gertrudis

(56) References cited:
- DE-A1- 10 121 231
- DE-A1-102012 107 623
- US-A- 4 375 307
- US-A- 5 484 309

## Description

### Technical field of the invention

The present invention relates to a socket assembly with multiple flush-mounting boxes for flush-mounted installation in a wall, the socket assembly being configured for the provision of power to multiple electrical loads.

### Background of the invention

As known by a person skilled in the art, a socket assembly usually comprises a base and a cover. The base is provided with the electrical socket function, i.e. a socket outlet. The cover typically comprises a central member, which is often also referred to as central plate or finishing set, and a cover frame, which may also be referred to as flush surround plate and which extends around the central member. The base is mounted in a flush-mounting box and connected to electrical wires in the wall.

When multiple sockets need to be provided, it is common to arrange a plurality of flush-mounting boxes next to each other in a wall. Optionally, the flush-mounting boxes may be attached to each other before arranging the attached boxes into the wall. The base with socket function is typically mounted in a mounting box using a screw or claw connection. In some countries, the claw connection is preferred as it has more degrees of freedom when having to level the base in the mounting box. The claw grips onto an inner sidewall of the flush-mounting box. In other words, when a first and second mounting box are arranged next to each other, a first claw grips onto a first sidewall of the first mounting box and a second claw grips onto a second sidewall of the second mounting box, said second sidewall being adjacent the first sidewall. These first and second sidewalls create a wall barrier between the interior of the first and second mounting box. Any electrical wires to be connected to the first and second base need to pass through holes in the sidewalls of the flush-mounting boxes.

DE 10 2012 107623 relates to a connector block having a hard and flattened insulating protective sheath with two oppositely facing planar shaped major sides. Electrical wire conductors e.g. phase, neutral and earth conductors, comprise ends and are accommodated in the protective sheath. The electrical conductors are insulated from each other and protrude from the protective sheath over the major sides, which are fixed perpendicular to the ends. The protective sheath is made of an insulating material. The protective sheath comprises a connection unit at device mechanisms.

DE 101 21 231 relates to a socket outlet having a holder for receiving a plug and on the sides having at least one coupling sleeve for receiving a connection, by means of which an electrical connection can be formed to at least one adjacent socket outlet.

### Summary of the invention

It is an object of embodiments of the present invention to provide a socket assembly with multiple flush-mounting boxes for flush-mounted installation in a wall, which allows for an improved mounting and wiring of the socket bases in the respective socket mounting boxes.

In a first aspect, the present invention provides a socket assembly for flush-mounted installation in a wall. The socket assembly comprises a first flush-mounting box having a first sidewall and a second flush-mounting box having a second sidewall, the first and second sidewall being intended for being arranged adjacent to each other in the wall. The socket assembly further comprises a first base and a second base, each comprising a socket function and a first fixation means and a second fixation means for respectively fixing the first and second base in respectively the first and second flush-mounting box. According to the present invention, the socket assembly furthermore comprises a bridge part configured for extending across the first and second sidewall inside the interior of the first and second flush-mounting box and behind the first and second base, the bridge part comprising electrically conductive paths electrically connecting the socket function of the first base to the socket function of the second base.

By using a bridge part that connects the socket function of the first base and the socket function of the second base, the mounting of the first and second bases in the respective first and second flush-mounting boxes is significantly simplified with respect to prior art socket assemblies. With a socket assembly according to embodiments of the invention, it is avoided that wires for connecting the first and second socket function have to pass through the side walls of the flush-mounting boxes. Further, a socket assembly with a bridge part according to embodiments of the invention will not hinder the use of the fixation means for fixing the first and second base in respectively the first and second flush-mounting box. By having a bridge part which extends behind the first and second base, the connection between the electrically conductive parts and the socket functions can be easily realized.

According to embodiments of the invention, the electrically conductive paths may have first connection parts and second connection parts connectable to the socket function of respectively the first and second base. The first and second connection parts may, according to embodiments of the invention, be elongate flexible or bendable parts such that they can be manipulated and inserted in a hole in respectively the first and second base. The first and second connection parts may be provided at respectively a first and second upper edge of the bridge part. Positioning the first and second connection parts at an upper edge will allow for conveniently connecting the electrically conductive paths to the socket functions, because the socket functions typically comprise holes in an upper part thereof.

The bridge part may, according to embodiments of the invention, comprise at least a first and a second fold line extending parallel to a front edge of the first and second sidewall, such that a first panel of the bridge part can be folded against the inner side of the first sidewall and a second panel of the bridge part can be folded against the inner side of the second sidewall. Such fold lines will allow for an easy arrangement of the bridge part in the flush-mounting boxes. According to further embodiments, the bridge part may comprise a third and a fourth fold line extending parallel to the front edge of the first and second sidewall, the third fold line extending between the first fold line and a first outer edge of the bridge part, and the fourth fold line extending between the second fold line and a second outer edge of the bridge part. In that way, the outer edges of the bridge part can easily be arranged behind the first and second socket function.

According to embodiments of the invention, the bridge part may comprise a flexible member, such that the flexible member can extend from an inner side of the first sidewall to an inner side of the second sidewall. According to further embodiments of the invention, further flexible members may be provided for allowing parts of the bridge part to extend behind the first and second socket function.

The bridge part may be configured to allow a portion of the first and second fixation means to extend through or adjacent the bridge part to grip onto respectively the first and second sidewall.

According to embodiments of the invention, the first and second fixation means may each comprise at least two claws, and the bridge part may then be adapted, e.g. by having suitable recesses to allow a claw to extend through the bridge part. According to other embodiments of the invention, the fixation means may be screws which fix a frame of the base to the flush-mounting box. According to such embodiments, the bridge part does not need to be provided with recesses. The bridge part may, according to embodiments of the invention, comprise a printed circuit board (PCB), for example a multilayer PCB. The PCB may be a flexible PCB or a PCB provided with a number of fold lines. In that way, the conductive paths can easily be arranged.

According to embodiments of the invention, the first and second base may respectively comprise a first and a second frame, the first and second frame being configured to extend in front of the first and second socket function, respectively, wherein the first and second frame are configured to be attached to the bridge part.

According to embodiments of the invention, the second flush-mounting box may have a third sidewall opposite the second sidewall and the socket assembly may further comprise a third flush-mounting box. The third flush-mounting box may comprise a fourth sidewall intended for being arranged adjacent to the third sidewall in the wall; a third base comprising a socket function and a third fixation means for fixing the third base in the third flush-mounting box. According to these embodiments, the bridge part may further be configured for extending across said third and fourth sidewall inside the interior of the third flush-mounting box behind the third base, whereby the electrically conductive paths of the bridge part are also connectable to the socket function of the third base.

The socket assembly may further comprise a first and second central member each comprising at least two through-holes in which at least two pins of a plug are insertable for being electrically connected to the socket function of respectively the first and second base, the first and second central member being intended for being attached to respectively the first and second base.

According to specific embodiments, the first and second central member may be made of a plastic material and/or the first and second base may each comprise a metal frame configured for fixing the base in the opening in the wall.

According to embodiments of the invention, the socket assembly may further comprise a first and a second cover frame configured for respectively surrounding the first and second central member.

According to a second aspect of the invention, a bridge part is provided for use in a socket assembly according embodiments of the invention. The bridge part is configured for extending across a first and second sidewall of a first and second flush-mounting box, inside the interior of the first and second flush-mounting box and behind a first and second base. The bridge part comprises electrically conductive paths connectable to the socket function of the first and second base, respectively.

The bridge part may have properties as described in the embodiments above. An exemplary method for installing a plurality of socket functions in a wall, comprises:
arranging a plurality of flush-mounting boxes adjacent to each other in the wall;
selecting a bridge part configured for extending across adjacent wall parts of the plurality of flush-mounting boxes and behind a corresponding plurality of bases intended for being arranged in the plurality of flush-mounting boxes; the plurality of bases comprising the plurality of socket functions; the bridge part being provided with electrically conductive paths for electrically connecting the plurality of socket functions;
connecting the plurality of socket functions to the electrically conductive paths;
arranging the bridge part with the plurality of bases in the plurality of flush-mounting boxes; and fixing the plurality of bases in the plurality of flush-mounting boxes.

Selecting of a bridge part may comprise cutting a strip with electrically conductive paths to size in function of the plurality of socket functions to be connected.

### Brief description of the drawings

It has to be noted that same reference signs in the different figures refer to same, similar or analogous elements.
Figure 1 illustrates an exploded perspective view looking from the front to the back of a socket assembly according to embodiments of the invention;
Figure 2 illustrates a perspective view looking from the front to the back of the socket assembly of the invention of Fig. 1, in an assembled state;
Figure 3 is a schematic view of a bridge part according to a first embodiment of the invention;
Figure 4 is a schematic view of a bridge part according to a second embodiment of the invention;
Figure 5 is a schematic top view of a socket assembly according to further embodiments of the invention;
Figure 6 is an exploded perspective view looking from the front to the back of a a socket assembly according to embodiments of the invention.

### Description of illustrative embodiments

In the description different embodiments will be used to describe the invention. Therefore reference will be made to different drawings. It has to be understood that these drawings are intended to be non-limiting, the invention is only limited by the claims. The drawings are thus for illustrative purposes, the size of some of the elements in the drawings may be exaggerated for clarity purposes.

The term "comprising" is not to be interpreted as limiting the invention in any way. The term "comprising", used in the claims, is not intended to be restricted to what means is described thereafter; it does not exclude other elements, parts or steps.

The term "connected" as used in the claims and in the description has not to be interpreted as being restricted to direct connections, unless otherwise specified. Thus, part A being connected to part B is not limited to part A being in direct contact to part B, but also includes indirect contact between part A and part B, in other words also includes the case where intermediate parts are present in between part A and part B.

In the context of the present invention, the term "socket assembly" refers to an assembly suitable for placement in a fixed location in the building and configured for facilitating the provision of power to a load in the wall. Typically, the assembly is intended and configured for being mounted at least partially in an opening in the wall where the socket function of the first base is connected to electrical wires present in the wall. Typically, the electrical wires in the wall comprise wires connected to the mains. However, in other embodiments, the electrical wires in the wall may comprise wires connected to a DC power source. More generally, the wires in the wall may be connected to any AC or DC power source.

Not all embodiments of the invention comprise all features of the invention. In the following description and claims, any of the claimed embodiments can be used in any combination.

The present invention provides a socket assembly for flush-mounted installation in a wall. The socket assembly comprises a first flush-mounting box having a first sidewall and a second flush-mounting box having a second sidewall, the first and second sidewall being intended for being arranged adjacent to each other in the wall. The socket assembly further comprises a first base and a second base, each comprising a socket function; and a first fixation means and a second fixation means for respectively fixing the first and second base in respectively the first and second flush-mounting box. According to the invention, the socket assembly furthermore comprises a bridge part configured for extending across the first and second sidewall inside the interior of the first and second flush-mounting box and behind the first and second base, the bridge part comprising electrically conductive paths electrically connecting the socket function of the first base to the socket function of the second base.

By using a bridge part that connects the socket function of the first base and the socket function of the second base, the mounting of the first and second bases in the respective first and second flush-mounting boxes is significantly simplified with respect to prior art socket assemblies. With a socket assembly according to embodiments of the invention, it is avoided that wires for connecting the first and second socket function have to pass through the side walls of the flush-mounting boxes. Further, a socket assembly with a bridge part according to embodiments of the invention will not hinder the use of the fixation means for fixing the first and second base in respectively the first and second flush-mounting box. By having a bridge part which extends behind the first and second base, the connection between the electrically conductive parts and the socket functions can be easily realized.

The present invention will hereinafter be described by means of different embodiments. It has to be understood that these embodiments are only for the ease of understanding the invention and are not intended to limit the invention in any way.

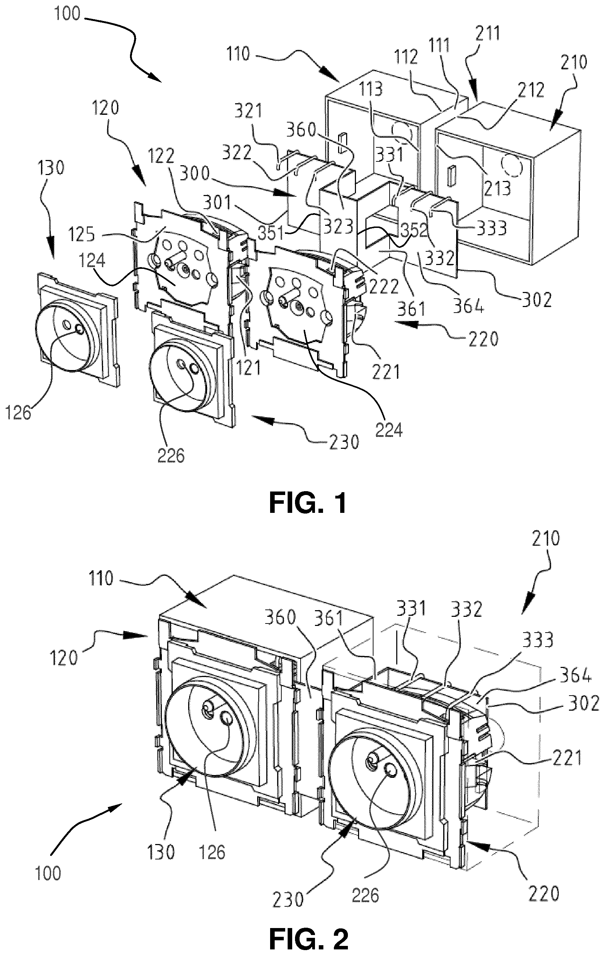

Figures 1 and 2 illustrate a socket assembly 100 for flush-mounted installation in a wall according to a first embodiment of the invention. The socket assembly 100 comprises a first and a second flush-mounting box 110, 210 respectively having a first and second sidewall 111, 211. The flush-mounting boxes 110, 210 are intended for being installed such that the first and second sidewall 111, 211 are arranged adjacent to each other in the wall. The socket assembly 100 further comprises a first and second base 120, 220 each comprising a socket function 124, 224, i.e. an electrical function allowing the insertion of a plug, typically a plug with two pins and an earth connection. The socket assembly 100 furthermore comprises a first fixation means 121 and a second fixation means 221 for respectively fixing the first and second base 120, 220 in respectively the first and second flush-mounting box 110, 210. According to embodiments of the invention, and as illustrated in Figure 1, the first and second base 120, 220 may fixed in respectively the first and a second flush-mounting box 110, 210 by means of respectively a first set of claws 121 and a second set of claws 221. The claws 121, 221 may be provided on opposite sides of the base 120, 220 and allow for level mounting of the base 120, 220 in the respective flush-mounting box 110, 210.

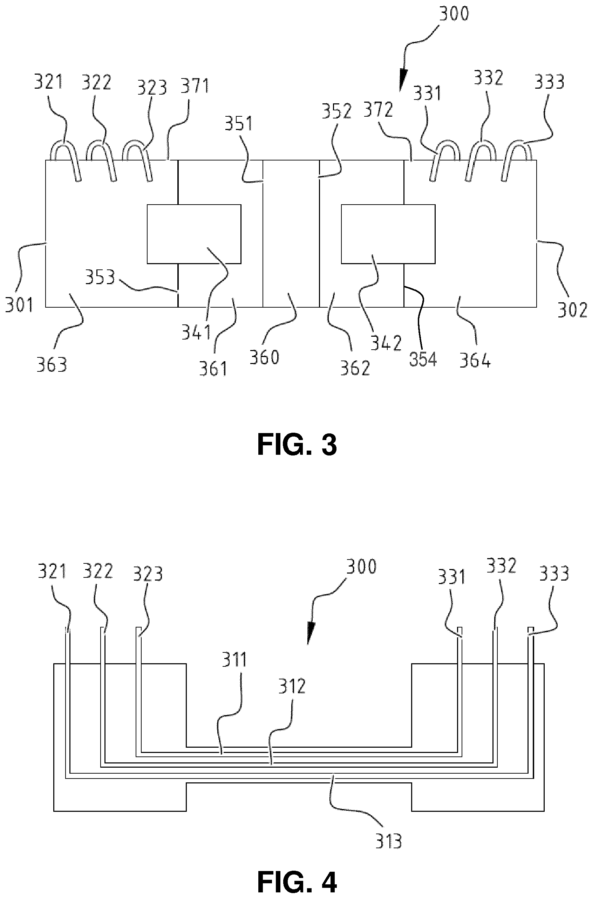

The socket assembly 100 further comprises a bridge part 300 configured for extending from inside the interior of the first flush-mounting box 110 to interior of the second flush-mounting box 210 across the first and second sidewall 111, 211 and behind the first and second base 120, 220. The bridge part 300 comprises electrically conductive paths (not shown in figure 1, but may be integrated in the bridge part 300 as shown in figure 4, see reference numerals 311, 312, 313 electrically connecting the socket function 124 of the first base 120 to the socket function 224 of the second base 220. The electrically conductive paths 311, 312, 313 have first connection parts 321, 322, 323 and second connection parts 331, 332, 333 which are connectable to the socket function 124, 224 of respectively the first and second base 120, 220. To that end the first and second base 120, 220 may be provided with wire connection holes 122, 222 in which the first and second connection parts 321, 322, 323, 331, 332, 333 can be fixed by means of, for example, screws accessible at the front of the base 120, 220 as known by a person skilled in the art. According to the present embodiment, the first and second connection parts 321, 322, 323; 331, 332, 333 may be provided at a first and second upper edge 371, 372 of the bridge part 300, respectively, such that they can be easily inserted in the holes 122, 222.

Typically the connection parts 321, 322, 323; 331, 332, 333 may be conductive lines that can be inserted in the suitable holes 122, 222 in the socket functions 124, 224, e.g. standard holes 122, 222 for connecting a socket function to the net. However, it is also possible to provide wire/line receiving parts as first and second connection parts 321, 322, 323; 331, 332, 333, and to use separate wires or lines to connect the electrically conductive lines of the bridge part 300 to the socket functions 124, 224. According to a preferred embodiment, for each socket assembly 100 three conductive paths 311, 312, 313 may be provided and three connection parts 321, 322, 323 and 331, 332, 333 for each socket function 124, 224 to be connected.

According to embodiments of the invention, the first and second connection parts 321, 322, 323; 331, 332, 333 may be elongate flexible or bendable parts such that the connection parts 321, 322, 323; 331, 332, 333 can be manipulated and inserted in a hole 122, 222 in respectively the first and second base 120, 220. The flexible parts may be metal wires. The bendable parts may also be rigid parts with a number of fold lines allowing the bendable parts to take the shape of an arch.

As can be seen from figures 1 and 3, the bridge part 300 may comprise a first and a second fold line 351, 352 extending in a direction parallel to a front edge 113, 213 of the first and second sidewall 111, 211, such that a first panel 361 of the bridge part 300 can be folded against the inner side of the first sidewall 111 and a second panel 362 of the bridge part 300 can be folded against the inner side of the second sidewall 211. A central panel 360 is located between the first and second fold line 351, 352, and extends over the front edges 113, 213 of the first and second sidewall 111, 211 of the flush-mounting boxes 110, 210. The bridge part 300 further comprises a third and a fourth fold line 353, 354 extending parallel to the front edge 113, 213 of the first and second sidewall 111, 211. The third fold line 353 is located between the first fold line 351 and a first outer edge 301 of the bridge part 300, and the fourth fold line 354 is located between the second fold line 352 and a second outer edge 302 of the bridge part 300. Through the third and fourth fold lines 353, 354 the outer panels 363 and 364 of the bridge part 300 can be folded respectively behind the first and second base 120, 220.

According to other embodiments of the invention, the bridge part 300 may consist of or may comprise a flexible member, e.g. a flexible PCB, such that the flexible member can extend from an inner side of the first sidewall 111 to an inner side of the second sidewall 112. Such an embodiment is schematically illustrated in figure 4. According to such embodiments, and similar to the bridge part 300 illustrated in figures 1 to 3, the bridge part 300 may be configured to extend behind the first and second base 120, 220.

Preferably the bridge part 300 may be configured to allow a portion of the first and second fixation means 121, 221, e.g. claws, to extend through or adjacent the bridge part 300 to grip onto respectively the first and second sidewall 111, 211. In the bridge part 300 according to the embodiment of figure 3, to that end, two recesses 341, 342 may be provided. In the bridge part 300 according to the embodiment of figure 4, the shape of the bridge part 300 is such that the first and second fixation means 121, 221, e.g. claws, extend adjacent to the bridge part 300.

According to embodiments of the invention, the bridge part 300 may comprise a PCB, e.g. a multilayer PCB. Preferably the bridge part 300 comprises the electrical paths between a substrate and a coating or top layer. Preferably the bridge part 300 may have a thickness which is lower than 4 mm, preferably lower than 2,5 mm.

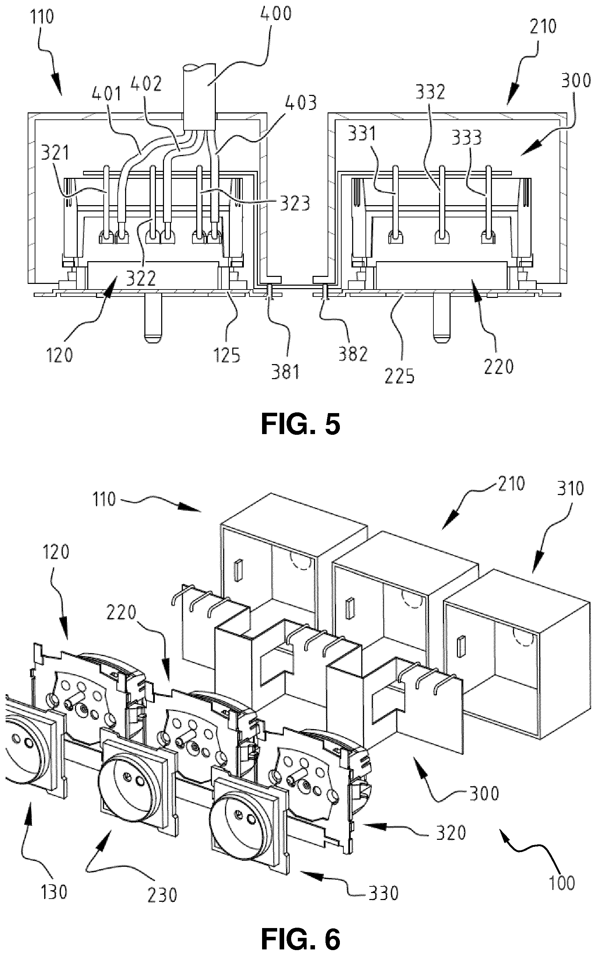

According to embodiments of the invention, the first and second base 120, 220 may comprise a first and a second frame 125, 225, respectively. The first and second frame 125, 225 may, for example, be a metal frame and may be configured for fixing the base in the opening in the wall. The first and second frame 125, 225 may be configured to extend in front of respectively the first and second socket function 124, 224, and may be configured to be attached to the bridge part 300, see reference numerals 381, 382 in figure 5. In that way, the bridge part 300 may be attached to the frame, whereupon the first and second base 120, 220 and the bridge part 300 may be inserted as a unit in the first and second flush-mounting boxes 110, 210.

The socket assembly 100 may furthermore comprise a first and second central member 130, 230 each comprising at least two through-holes 126, 226 in which at least two pins of a plug are insertable for being electrically connected to the socket function 124, 224 of respectively the first and second base 120, 220. The first and second central member 130, 230 are intended for being attached to respectively the first and second base 120, 220. The first and second central member 130, 230 may, according to embodiments of the invention, be made of a plastic material.

The socket assembly 100 may further comprise one or more cover frames (not shown) configured for surrounding the first and second central member 130, 230.

The socket assembly 100 controls the provision of power to electrical appliances via plugs inserted in the socket outlet. The socket assembly 100 is intended to be built-in in an opening in the wall, where the socket function 124 of the first base 120 is connected to electrical wires 401, 402, 403 of a cable 400 present in the wall, see figure 5. Typically, the electrical wires 401, 402, 403 in the wall comprise wires connected to the mains.

It has to be noted that the concept of the invention also can be extended to an assembly with more than two flush-mounting boxes, wherein the bridge part 300 extends throughout adjacent flush-mounting boxes, from the backside of a first socket function 124 in a first flush-mounting box 110, over adjacent sidewalls 111, 211 of the first and a second flush-mounting box 110, 210, to the backside of a second socket function 224 in a second flush-mounting box 210, over adjacent sidewalls 213, 211' of the second and a third flush-mounting box 210, 210', to the backside of the third socket function 224' in a third flush-mounting box 210'. Figure 6 illustrates a further embodiment of a socket assembly 100 for flush-mounted installation in a wall according to the invention. The socket assembly 100 may comprise a first, a second, and a third flush-mounting box 110, 210, 210' arranged adjacent to each other such that first and second sidewalls 111, 211 create a first wall barrier and third and fourth sidewalls 213, 211' create a second wall barrier. The socket assembly 100 may further comprise a first, a second, and a third base 120, 220, 220' each comprising a socket function 124, 224, 224', i.e. an electrical function allowing the insertion of a plug, typically a plug with two pins and an earth connection. The first, second and third base 120, 220, 220' may be fixed in the respective flush-mounting boxes 110, 210, 210' by means of claws or screws.

The bridge part 300 according to the present embodiments may be similar to the bridge part of figure 1 with this difference that it comprises two "bridges" for extending across the first and second wall barrier.

A person skilled in the art may understand that the bridge part 300 may be used to connect even more than three flush-mounting boxes 110, 210, 210'. The bridge part 300 may be provided as a long strip with electrically conductive paths and a plurality of sets of connection parts, wherein the strip may be cut to size by an electrician in function of the number of flush-mounting boxes 110, 210, 210' that need to be connected.

Whilst the principles of the invention have been set out above in connection with specific embodiments, it is to be understood that this description is merely made by way of example and not as a limitation of the scope of protection which is determined by the appended claims.

## Claims

1. A socket assembly (100) for flush-mounted installation in a wall; the socket assembly (100) comprising:
- a first flush-mounting box (110) having a first sidewall (111) and a second flush-mounting box (210) having a second sidewall (211), the first and second sidewall (111, 211) being intended for being arranged adjacent to each other in the wall;
- a first base (120) and a second base (220), each comprising a socket function (124, 224);
- a first fixation means (121) and a second fixation means (221) for respectively fixing the first and second base (120, 220) in respectively the first and second flush-mounting box (110, 210);
- a bridge part (300) configured for extending across the first and second sidewall (111, 211) inside the interior of the first and second flush-mounting box (110, 210) and behind the first and second base (120, 220), the bridge part (300) comprising electrically conductive paths (311, 312, 313) electrically connecting the socket function (124) of the first base (120) to the socket function (224) of the second base (220).

2. A socket assembly (100) according to claim 1, wherein the electrically conductive paths (311, 312, 313) have first connection parts (321, 322, 323) and second connection parts (331, 332, 333) connectable to the socket function (124, 224) of respectively the first and second base (120, 220).

3. A socket assembly (100) according to claim 2, wherein the first and second connection parts (321, 322, 323, 331, 332, 333) are elongate flexible or bendable parts such that they can be manipulated and inserted in a hole (122, 222) in respectively the first and second base (120, 220).

4. A socket assembly (100) according to claim 2 or 3, wherein the first and second connection parts (321, 322, 323, 331, 332, 333) are provided at respectively a first and second upper edge (371, 372) of the bridge part (300).

5. A socket assembly (100) according to any of the previous claims, wherein the bridge part (300) comprises at least a first and a second fold line (351, 352) extending parallel to a front edge (113, 213) of the first and second sidewall (111, 211), such that a first panel (361) of the bridge part (300) can be folded against the inner side of the first sidewall (111) and a second panel (362) of the bridge part (300) can be folded against the inner side of the second sidewall (211).

6. A socket assembly (100) according to claim 5, wherein the bridge part (300) comprises a third and a fourth fold line (353, 354) extending parallel to the front edge (113, 213) of the first and second sidewall (111, 211), the third fold line (353) extending between the first fold line (351) and a first outer edge (301) of the bridge part (300), and the fourth fold line (354) extending between the second fold line (352) and a second outer edge (302) of the bridge part (300).

7. A socket assembly (100) according to any of the claims 1 to 4, wherein the bridge part (300) comprises a flexible member, such that the flexible member can extend from an inner side of the first sidewall (111) to an inner side of the second sidewall (121).

8. A socket assembly (100) according to any of the previous claims, wherein the bridge part (300) is configured to allow a portion of the first and second fixation means (121, 221) to extend through or adjacent the bridge part (300) to grip onto respectively the first and second sidewall (111, 112).

9. A socket assembly (100) according to any of the previous claims, wherein the bridge part (300) comprises a PCB.

10. A socket assembly (100) according to any of the previous claims, wherein the first and second connections parts (321, 322, 323, 331, 332, 333) each comprise at least two claws.

11. A socket assembly (100) according to any of the previous claims, wherein the first and second base (120, 220) respectively comprise a first and a second frame (125, 225), the first and second frame (125, 225) being configured to extend in front of the first and second socket function (124, 224), respectively, wherein the first and second frame (125, 225) are configured to be attached to the bridge part (300).

12. A socket assembly (100) according to any of the previous claims, wherein the second flush-mounting box (210) has a third sidewall (213) opposite the second sidewall (211) and wherein the socket assembly (100) further comprises a third flush-mounting box (210') comprising:
- a fourth sidewall (211') intended for being arranged adjacent to the third sidewall (213) in the wall;
- a third base (220') comprising a socket function (224'); and
- a third fixation means (221') for fixing the third base (220') in the third flush-mounting box (210');
and wherein the bridge part (300) is further configured for extending across said third and fourth sidewall (213, 211') inside the interior of the third flush-mounting box (210') and behind the third base (221'), wherein the electrically conductive paths (311, 312, 313) of the bridge part (300) are also connectable to the socket function (224') of the third base (220').

13. A socket assembly (100) according to any of the previous claims, further comprising a first and second central member (130, 230) each comprising at least two through-holes (126, 226) in which at least two pins of a plug are insertable for being electrically connected to the socket function (124, 224) of respectively the first and second base (120, 220); the first and second central member (130, 230) being intended for being attached to respectively the first and second base (120, 220).

14. A socket assembly (100) according to claim 13, wherein the first and second central member (130, 230) are made of a plastic material and/or wherein the first and second base (120, 220) each comprise a metal frame configured for fixing the base (120, 220) in the opening in the wall.

15. A socket assembly (100) according to claim 13 or 14, further comprising a first and a second cover frame configured for respectively surrounding the first and second central member (130, 230).

## Patentansprüche

1. Steckdosenanordnung (100) zur Unterputzinstallation in eine Wand; wobei die Steckdosenanordnung (100) umfasst:
- eine erste Unterputzdose (110) mit einer ersten Seitenwand (111) und eine zweite Unterputzdose (210) mit einer zweiten Seitenwand (211), wobei die erste und zweite Seitenwand (111, 211) dazu bestimmt sind, um nebeneinander in der Wand angeordnet zu werden;
- ein erstes Unterteil (120) und ein zweites Unterteil (220), die jeweils eine Steckdosenfunktion (124, 224) umfassen;
- ein erstes Befestigungsmittel (121) und ein zweites Befestigungsmittel (221), um jeweils das erste und zweite Unterteil (120, 220) in der jeweils ersten und zweiten Unterputzdose (110, 210) zu befestigen;
- ein Brückenteil (300), das so eingerichtet ist, dass es sich über die erste und zweite Seitenwand (111, 211) innerhalb des Innenraumes der ersten und zweiten Unterputzdose (110, 210) und hinter dem ersten und zweiten Unterteil (120, 220) erstreckt, wobei das Brückenteil (300) elektrisch leitfähige Bahnen (311, 312, 313) umfasst, die die Steckdosenfunktion (124) des ersten Unterteils (120) mit der Steckdosenfunktion (224) des zweiten Unterteils (220) elektrisch verbinden.

2. Steckdosenanordnung (100) nach Anspruch 1, wobei die elektrisch leitfähigen Bahnen (311, 312, 313) erste Verbindungsteile (321, 322, 323) und zweite Verbindungsteile (331, 332, 333) aufweisen, die mit der Steckdosenfunktion (124, 224) des jeweils ersten und zweiten Unterteils (120, 220) verbindbar sind.

3. Steckdosenanordnung (100) nach Anspruch 2, wobei die ersten und zweiten Verbindungsteile (321, 322, 323, 331, 332, 333) längliche flexible oder biegbare Teile sind, sodass sie bearbeitet und in ein Loch (122, 222) im jeweils ersten und zweiten Unterteil (120, 220) eingesetzt werden können.

4. Steckdosenanordnung (100) nach Anspruch 2 oder 3, wobei die ersten und zweiten Verbindungsteile (321, 322, 323, 331, 332, 333) an jeweils einer ersten und zweiten Oberkante (371, 372) des Brückenteils (300) vorgesehen sind.

5. Steckdosenanordnung (100) nach einem der vorstehenden Ansprüche, wobei das Brückenteil (300) mindestens eine erste und eine zweite Klapplinie (351, 352) umfasst, die sich parallel zu einer Vorderkante (113, 213) der ersten und zweiten Seitenwand (111, 211) erstrecken, sodass eine erste Platte (361) des Brückenteils (300) gegen die Innenseite der ersten Seitenwand geklappt werden kann (111) und eine zweite Platte (362) des Brückenteils (300) gegen die Innenseite der zweiten Seitenwand (211) geklappt werden kann.

6. Steckdosenanordnung (100) nach Anspruch 5, wobei das Brückenteil (300) eine dritte und eine vierte Klapplinie (353, 354) umfasst, die sich parallel zur Vorderkante (113, 213) der ersten und zweiten Seitenwand (111, 211) erstreckt, wobei sich die dritte Klapplinie (353) zwischen der ersten Klapplinie (351) und einer ersten Außenkante (301) des Brückenteils (300) erstreckt, und wobei sich die vierte Klapplinie (354) zwischen der zweiten Klapplinie (352) und einer zweiten Außenkante (302) des Brückenteils (300) erstreckt.

7. Steckdosenanordnung (100) nach einem der Ansprüche 1 bis 4, wobei das Brückenteil (300) ein flexibles Element umfasst, sodass sich das flexible Element von einer Innenseite der ersten Seitenwand (111) zu einer Innenseite der zweiten Seitenwand (121) erstrecken kann.

8. Steckdosenanordnung (100) nach einem der vorstehenden Ansprüche, wobei das Brückenteil (300) so eingerichtet ist, es einem Abschnitt des ersten und zweiten Befestigungsmittels (121, 221) zu ermöglichen, sich durch das Brückenteil (300) hindurch oder daran angrenzend zu erstrecken, um an jeweils der ersten und zweiten Seitenwand (111, 112) zu greifen.

9. Steckdosenanordnung (100) nach einem der vorstehenden Ansprüche, wobei das Brückenteil (300) eine PCB umfasst.

10. Steckdosenanordnung (100) nach einem der vorstehenden Ansprüche, wobei die ersten und zweiten Verbindungsteile (321, 322, 323, 331, 332, 333) jeweils mindestens zwei Krallen umfassen.

11. Steckdosenanordnung (100) nach einem der vorstehenden Ansprüche, wobei das erste und zweite Unterteil (120, 220) jeweils einen ersten und einen zweiten Rahmen (125, 225) umfassen, wobei der erste und zweite Rahmen (125, 225) so eingerichtet sind, dass sie sich vor der ersten bzw. zweiten Steckdosenfunktion (124, 224) erstrecken, wobei der erste und zweite Rahmen (125, 225) so eingerichtet sind, um an dem Brückenteil (300) befestigt zu werden.

12. Steckdosenanordnung (100) nach einem der vorstehenden Ansprüche, wobei die zweite Unterputzdose (210) eine dritte Seitenwand (213) gegenüber der zweiten Seitenwand (211) aufweist und wobei die Steckdosenanordnung (100) ferner eine dritte Unterputzdose (210') umfasst, umfassend:
- eine vierte Seitenwand (211'), die dazu bestimmt ist, neben der dritten Seitenwand (213) in der Wand angeordnet zu werden;
- ein drittes Unterteil (220'), umfassend eine Steckdosenfunktion (224'); und
- ein drittes Befestigungsmittel (221') zum Befestigen des dritten Unterteils (220') in der dritten Unterputzdose (210');
und wobei das Brückenteil (300) ferner so eingerichtet ist, um sich über die dritte und vierte Seitenwand (213, 211') im Inneren der dritten Unterputzdose (210') und hinter dem dritten Unterteil (221') zu erstrecken, wobei die elektrisch leitfähigen Bahnen (311, 312, 313) des Brückenteils (300) auch mit der Steckdosenfunktion (224') des dritten Unterteils (220') verbindbar sind.

13. Steckdosenanordnung (100) nach einem der vorstehenden Ansprüche, ferner umfassend ein erstes und zweites zentrales Element (130, 230), die jeweils mindestens zwei Durchgangslöcher (126, 226) umfassen, in die mindestens zwei Stifte eines Steckers einsteckbar sind, um elektrisch mit der Steckdosenfunktion (124, 224) des jeweils ersten und zweiten Unterteils (120, 220) verbunden zu sein; wobei das erste und zweite zentrale Element (130, 230) dazu bestimmt sind, am jeweils ersten und zweiten Unterteil (120, 220) angebracht zu werden.

14. Steckdosenanordnung (100) nach Anspruch 13, wobei das erste und zweite zentrale Element (130, 230) aus Kunststoffmaterial gebildet sind und/oder wobei das erste und zweite Unterteil (120, 220) jeweils einen Metallrahmen umfassen, der so eingerichtet ist, um das Unterteil (120, 220) in der Öffnung in der Wand zu befestigen.

15. Steckdosenanordnung (100) nach Anspruch 13 oder 14, ferner umfassend einen ersten und einen zweiten Abdeckrahmen, die so eingerichtet sind, dass sie das jeweils erste und zweite zentrale Element (130, 230) umgeben.

## Revendications

1. Ensemble douille (100) pour une installation encastrée dans un mur ; l'ensemble douille (100) comprenant :
- un premier boîtier d'encastrement (110) ayant une première paroi latérale (111) et un deuxième boîtier d'encastrement (210) ayant une deuxième paroi latérale (211), les première et deuxième parois latérales (111, 211) étant destinées à être agencées de manière adjacente l'une à l'autre dans le mur ;
- une première base (120) et une deuxième base (220), chacune comprenant une fonction de douille (124, 224) ;
- un premier moyen de fixation (121) et un deuxième moyen de fixation (221) pour fixer respectivement les première et deuxième bases (120, 220) respectivement dans les premier et deuxième boîtiers d'encastrement (110, 210) ;
- une partie de pont (300) configurée pour s'étendre à travers les première et deuxième parois latérales (111, 211) à l'intérieur des premier et deuxième boîtiers d'encastrement (110, 210) et derrière les première et deuxième bases (120, 220), la partie de pont (300) comprenant des chemins électriquement conducteurs (311, 312, 313) reliant électriquement la fonction de douille (124) de la première base (120) à la fonction de douille (224) de la deuxième base (220).

2. Ensemble douille (100) selon la revendication 1, les chemins électriquement conducteurs (311, 312, 313) comportant des premières parties de raccordement (321, 322, 323) et des secondes parties de raccordement (331, 332, 333) pouvant être raccordées à la fonction de douille (124, 224) respectivement des première et deuxième bases (120, 220).

3. Ensemble douille (100) selon la revendication 2, les première et seconde parties de raccordement (321, 322, 323, 331, 332, 333) étant des parties flexibles ou pliables allongées de sorte qu'elles puissent être manipulées et insérées dans un trou (122, 222) respectivement dans les première et deuxième bases (120, 220).

4. Ensemble douille (100) selon la revendication 2 ou 3, les première et seconde parties de raccordement (321, 322, 323, 331, 332, 333) étant disposées respectivement au niveau d'un premier et d'un second bords supérieurs (371, 372) de la partie de pont (300).

5. Ensemble douille (100) selon l'une quelconque des revendications précédentes, la partie de pont (300) comprenant au moins une première et une deuxième lignes de pliage (351, 352) s'étendant parallèlement à un bord avant (113, 213) des première et deuxième parois latérales (111, 211), de sorte qu'un premier panneau (361) de la partie de pont (300) puisse être plié contre le côté interne de la première paroi latérale (111) et un second panneau (362) de la partie de pont (300) puisse être plié contre le côté interne de la deuxième paroi latérale (211).

6. Ensemble douille (100) selon la revendication 5, la partie de pont (300) comprenant une troisième et une quatrième lignes de pliage (353, 354) s'étendant parallèlement au bord avant (113, 213) des première et deuxième parois latérales (111, 211), la troisième ligne de pliage (353) s'étendant entre la première ligne de pliage (351) et un premier bord externe (301) de la partie de pont (300) et la quatrième ligne de pliage (354) s'étendant entre la deuxième ligne de pliage (352) et un second bord externe (302) de la partie de pont (300).

7. Ensemble douille (100) selon l'une quelconque des revendications 1 à 4, la partie de pont (300) comprenant un élément flexible, de sorte que l'élément flexible puisse s'étendre depuis un côté interne de la première paroi latérale (111) vers un côté interne de la deuxième paroi latérale (121).

8. Ensemble douille (100) selon l'une quelconque des revendications précédentes, la partie de pont (300) étant configurée pour permettre à une partie des premier et deuxième moyens de fixation (121, 221) de s'étendre à travers ou à proximité de la partie de pont (300) pour saisir respectivement les première et deuxième parois latérales (111, 112).

9. Ensemble douille (100) selon l'une quelconque des revendications précédentes, la partie de pont (300) comprenant une carte de circuits imprimés (PCB).

10. Ensemble douille (100) selon l'une quelconque des revendications précédentes, les première et seconde parties de raccordement (321, 322, 323, 331, 332, 333) comprenant chacune au moins deux griffes.

11. Ensemble douille (100) selon l'une quelconque des revendications précédentes, les première et deuxième bases (120, 220) comprenant respectivement des premier et second cadres (125, 225), les premier et second cadres (125, 225) étant configurés pour s'étendre respectivement devant les première et seconde fonctions de douille (124, 224), les premier et second cadres (125, 225) étant configurés pour être fixés à la partie de pont (300).

12. Ensemble douille (100) selon l'une quelconque des revendications précédentes, le deuxième boîtier d'encastrement (210) comportant une troisième paroi latérale (213) opposée à la deuxième paroi latérale (211) et l'ensemble douille (100) comprenant en outre un troisième boîtier d'encastrement (210') comprenant :
- une quatrième paroi latérale (211') destinée à être agencée adjacente à la troisième paroi latérale (213) dans le mur ;
- une troisième base (220') comprenant une fonction de douille (224') ; et
- un troisième moyen de fixation (221') pour fixer la troisième base (220') dans le troisième boîtier d'encastrement (210') ;
et la partie de pont (300) étant en outre configurée pour s'étendre à travers lesdites troisième et quatrième parois latérales (213, 211') à l'intérieur du troisième boîtier d'encastrement (210') et derrière la troisième base (221'), les chemins électriquement conducteurs (311, 312, 313) de la partie de pont (300) pouvant également être raccordés à la fonction de douille (224') de la troisième base (220').

13. Ensemble douille (100) selon l'une quelconque des revendications précédentes, comprenant en outre des premier et second éléments centraux (130, 230) comprenant chacun au moins deux trous traversants (126, 226) dans lesquels au moins deux broches d'une fiche peuvent être insérées pour être raccordées électriquement à la fonction de douille (124, 224) respectivement des première et deuxième bases (120, 220) ; les premier et second éléments
centraux (130, 230) étant destinés à être fixés respectivement aux première et deuxième bases (120, 220).

14. Ensemble douille (100) selon la revendication 13, les premier et second éléments centraux (130, 230) étant constitués d'un matériau plastique et/ou les première et deuxième bases (120,220) comprenant chacune un cadre métallique configuré pour fixer la base (120, 220) dans l'ouverture du mur.

15. Ensemble douille (100) selon la revendication 13 ou 14, comprenant en outre des premier et second cadres de couverture configurés pour entourer respectivement les premier et second éléments centraux (130, 230).
